# EUROPÄISCHE PATENTSCHRIFT

(11) **EP 2 902 196 B1**
(45) Veröffentlichungstag und Bekanntmachung des Hinweises auf die Patenterteilung: **24.08.2016**
(21) Anmeldenummer: 14153311.7
(22) Anmeldetag: 30.01.2014
(51) Int. Cl.: B27N 7/00, B27N 3/04, B32B 38/08, B32B 7/12, B32B 21/04, B32B 21/13, B32B 21/14

(54) **VERFAHREN ZUM HERSTELLEN EINES HOLZWERKSTOFFS UND HOLZWERKSTOFF AUS EINER TRÄGERPLATTE UND EINEM FURNIER**
METHOD FOR PRODUCING A WOOD-BASED MATERIAL AND WOOD-BASED MATERIAL COMPRISING A CARRIER BOARD AND ONE VENEER
PROCÉDÉ DE FABRICATION D'UN MATÉRIAU DÉRIVÉ DU BOIS ET MATÉRIAU DÉRIVÉ DU BOIS CONSTITUÉ D'UNE PLAQUE DE SUPPORT ET D'UN PLACAGE

(43) Veröffentlichungstag der Anmeldung: 05.08.2015
(60) Teilanmeldung: 16177811.3
(73) Patentinhaber: Flooring Technologies Ltd., Pieta PT9044 (MT)
(72) Erfinder: Kalwa, Dr. Norbert, 32805 Horn-Bad Meinberg (DE)
(74) Vertreter: Kalkoff & Partner

(56) Entgegenhaltungen:
- WO-A1-00/40403
- US-A1- 2006 172 118
- DATABASE WPI Week 199317 Thomson Scientific, London, GB; AN 1993-140066 XP002726997, & JP H05 77362 A (MATSUSHITA ELECTRIC WORKS LTD) 30. März 1993 (1993-03-30) & DATABASE EPODOC [Online] EUROPEAN PATENT OFFICE, THE HAGUE, NL; "Building panel",
- DATABASE WPI Week 199328 Thomson Scientific, London, GB; AN 1993-223803 XP002726998, & JP H05 147006 A (DAIKEN KOGYO KK) 15. Juni 1993 (1993-06-15) & DATABASE EPODOC [Online] EUROPEAN PATENT OFFICE, THE HAGUE, NL; "Manufacture of decorative sheet",
- DATABASE WPI Week 199328 Thomson Scientific, London, GB; AN 1993-223804 XP002726999, & JP H05 147007 A (DAIKEN KOGYO KK) 15. Juni 1993 (1993-06-15) & DATABASE EPODOC [Online] EUROPEAN PATENT OFFICE, THE HAGUE, NL; "Manufacture of decorative sheet",
- DATABASE WPI Week 199346 Thomson Scientific, London, GB; AN 1993-364604 XP002727000, & JP H05 269705 A (DAIKEN KOGYO KK) 19. Oktober 1993 (1993-10-19) & DATABASE EPODOC [Online] EUROPEAN PATENT OFFICE, THE HAGUE, NL;
- DATABASE WPI Week 199346 Thomson Scientific, London, GB; AN 1993-364603 XP002727001, & JP H05 269704 A (DAIKEN KOGYO KK) 19. Oktober 1993 (1993-10-19) & DATABASE EPODOC [Online] EUROPEAN PATENT OFFICE, THE HAGUE, NL;
- DATABASE WPI Week 198033 Thomson Scientific, London, GB; AN 1980-57744C XP002727002, & JP S55 86749 A (SADASHIGE TOKUSHU GOBAN KOGYO) 30. Juni 1980 (1980-06-30)

## Beschreibung

Die Erfindung betrifft ein Verfahren zum Herstellen eines Holzwerkstoffs, bei dem eine Trägerplatte und ein Furnier durch ein Kunstharz verbunden sind sowie eine Holzwerkstoffplatte.

Holzwerkstoffe, die eine Furnieroberfläche aufweisen, sind bekannt. Sie bestehen üblicherweise aus einem Holzwerkstoffträger (z.B. hochdichte Faserplatte (HDF), OSB-Platte, Spanplatte), einem mit sparsamen Leimauftrag aufgeleimten Furnier und einer Oberflächenvergütung, typischerweise einer Lackierung auf der Basis von UV-härtenden Lacken oder elektronenstrahlhärtenden Lacken. Die verwendeten Furniere weisen meist eine Stärke von 0,8 mm bis 2,5 mm auf. Zur Verklebung der Furniere auf der Trägerplatte werden meist Harnstoff- oder Polyvinylacetatleime mit den entsprechenden Härtern eingesetzt. Auf der Rückseite des Produkts befindet sich in der Regel ein Gegenzug auf Basis von Papier, Vorimprägnat oder Furnier, der die Spannungsgeometrie im Produkt gewährleisten soll. Derartige Produkte sind bekannt, so z.B. aus der DE 103 00 247, bei der ein Oriented Strand Board(OSB-Platte) als Trägerplatte und ein Furnier mittels Kunstharz miteinander verbunden sind, wobei zwischen Furnier und OSB-Platte ein Papier, ein so genanntes Underlay angeordnet ist, um ein Durchscheinen der OSB-Platte zu vermeiden. Aus der DE 10 2006 052 293 ist eine Trägerplatte, ebenfalls eine OSB-Platte, bekannt, die mittels Kunstharz mit einem Furnier verbunden ist. Die Furnieroberfläche ist bedruckt. Durch das Bedrucken wird ein Dekor erzeugt, das dann mit einem Lack oder Kunstharzüberzug versiegelt wird.

Schließlich ist eine Lindura ® Holzwerkstoffplatte der Schulte GmbH, Rüthen-Meiste bekannt, bei der eine hochdichte Faserplatte (HDF-Platte) als Trägerplatte mit einem Furnier verbunden ist, wobei die Verbindung durch eine Schicht aus einer pulverförmigen Mischung aus Holz und Kunstharz hergestellt wird. Auf der dem Furnier abgewandten Seite ist ein Gegenzug aufgebracht. Der Fokus liegt hier auf dem sparsamen Einsatz des Kunstharzes durch den Einsatz von recyceltem Holzpulver.

Furnierte Oberflächen sind als Echtholz-Oberflächen sehr geschätzt. Sie weisen eine angenehme Haptik auf und erzeugen angenehme akustische Verhältnisse. Sämtlichen bekannten Holzwerkstoffen mit einer Furnieroberfläche ist jedoch gemein, dass sie wegen der geringen Rohdichte des Furniers von meist nur 300 kg/m³ bis 500 kg/m³ nur eine geringe Druckfestigkeit aufweisen, die nur für wenige Verwendungen akzeptabel ist. Insbesondere im Bereich der Fußbodenbeläge sind furnierte Oberflächen kaum einsetzbar, weil das Furnier durch herabfallende Gegenstände schnell durchschlagen wird, der UV-oder strahlungshärtende Lack aber nicht repariert werden kann.

Das Aufbringen von Furnier auf Holzwerkstoffplatten wird unter anderem erläutert in JPH0577362 A, JPH05147006 A, JPH05147007 A, JPH05269705 A, JPH05269704 A, US 2006/0172118 und JPS5586749 A. Die WO 00/40403 A1 lehrt, einen Schmelzkleber auf eine Holzwerkstoffplatte aufzubringen, den Schmelzkleber zu trocknen und dann durch Auflegen und Verpressen eines Furniers das Furnier mit der Holzwerkstoffplatte zu verbinden. Keine der furnierten Holzwerkstoffplatten weist ein in seiner Druckfestigkeit ausreichend verbessertes Furnier auf.

Es stellt sich daher die Aufgabe, einen Holzwerkstoff bereitzustellen, bei dem auf einer Trägerplatte ein in seiner Druckfestigkeit verbessertes Furnier bereitgestellt wird.

Diese Aufgabe wird gelöst durch ein Verfahren nach Anspruch 1 und einen Holzwerkstoff nach Anspruch 11.

Das Verfahren zum Herstellen eines Holzwerkstoffs geht davon aus, dass der Holzwerkstoff aus einer Trägerplatte und einem Furnier besteht, die miteinander durch ein Kunstharz verbunden sind. Erfindungsgemäß wird jedoch, abweichend zum Stand der Technik, zum Verbinden von Trägerplatte und Furnier ein flüssiges Kunstharz im Überschuss auf Trägerplatte und/oder Furnier aufgebracht. Überschuss bezeichnet hier die Menge an Kunstharz, die, bezogen auf die zum Verleimen erforderliche Menge, zusätzlich auf Trägerplatte und/oder Furnier aufgebracht wird. Dann wird das im Überschuss aufgebrachte Kunstharz getrocknet, aber nicht ausgehärtet. Trägerplatte und Furnier werden zu einem Pressgutstapel gefügt und der Pressgutstapel wird in einer Hochdruckpresse zu einem Holzwerkstoff verpresst.

Das erfindungsgemäße Verfahren sieht vor, dass der Pressgutstapel in einer Hochdruckpresse, üblicherweise eine Durchlauf- oder Kurztaktpresse (KT-Presse), verpresst wird. Das bei Presstemperaturen wieder verflüssigte Kunstharz wird dabei in das weniger dichte Furnier gepresst; die meist dichtere Oberfläche der Trägerplatte nimmt weniger Kunstharz auf. Gleichzeitig wird das Furnier durch den Druck, den die Hochdruckpresse ausübt, komprimiert. Beide Effekte wirken synergistisch zusammen und steigern die Druckfestigkeit der

Furnieroberfläche. Die nach dem Komprimieren höhere Dichte des Furniers ist ebenso ein Beitrag zu einer höheren Druckfestigkeit wie das mindestens abschnittsweise Durchtränken des Furniers mit Kunstharz. Beide Maßnahmen widersprechen den üblichen Maßnahmen zur Herstellung eines Holzwerkstoffs mit einer Furnieroberfläche. Zum einen wird üblicherweise Kunstharz, das nur zum Fixieren des Furniers auf der Trägerplatte dient, mit meist bis zu 100g/m² (bezogen auf 100%) Feststoff sparsam eingesetzt und zum anderen vermeidet man das Pressen in einer Hochdruckpresse, um ein Komprimieren des Furniers zu vermeiden. Es hat sich jedoch herausgestellt, dass das Aussehen und die Haptik des erfindungsgemäßen Holzwerkstoffs unverändert ästhetisch ansprechend sind.

Wesentliches Merkmal der Erfindung ist es, dass das Kunstharz, bezogen auf die zum Verleimen erforderliche Menge, im Überschuss eingesetzt wird, weil vorgesehen ist, dass das erneut verflüssigte Kunstharz beim Pressvorgang das Furnier teilweise durchdringt bzw. zwischen die Fasern des Furniers vordringt und dort aushärtet. Das Eindringen des Kunstharzes in das Furnier ist zum Fixieren des Furniers auf der Trägerplatte nicht erforderlich, dafür genügt ein oberflächlicher Kontakt mit dem Kunstharz. Der Überschuss beträgt erfindungsgemäß, bezogen auf die zum Verleimen des Furniers erforderliche Menge an Kunstharz, mindestens 30%. Vorteilhaft beträgt die Menge an Kunstharz, die bei dem erfindungsgemäßen Verfahren eingesetzt werden, mehr als 50%, bevorzugt mehr als 100%, besonders bevorzugt von mehr als 200% der zum Verleimen des Furniers erforderlichen Menge an Kunstharz.

Das Einbringen von Stoffen, die das Eindringen des Kunstharzes in das Furnier verzögern oder unterbinden, z.B. von Holzmehl, ist von Nachteil. Holzmehl wird eingesetzt, um das "Durchschlagen" von Kunstharz zu verhindern, also gerade das Eindringen von Kunstharz in das Furnier bis zur Furnieroberfläche. Ein aktuelles Beispiel hierfür ist die vorstehend beschriebene "Lindura" ® Platte. Die erfindungsgemäßen Mengenvorgaben können, ausgehend vom üblichen und bekannten Verleimen eines Furniers auf einer Trägerplatte und den dort eingesetzten Mengen an Kunstharz von üblicherweise bis 100 g/m² bezogen auf 100 % Feststoff, mit wenigen orientierenden Versuchen vom Fachmann ermittelt und optimiert werden.

Bereits mit Einsatz von 130 g/m² Kunstharz können die positiven Effekte des erfindungsgemäßen Verfahrens und des erfindungsgemäßen Holzwerkstoffs wahrgenommen werden.

Nach einer vorteilhaften Ausführung der Erfindung werden mindestens 150 g/m² Kunstharz eingesetzt, um Furnier und Trägerplatte zu verbinden sowie die Druckfestigkeit des Furniers zu steigern. Weiter bevorzugt werden mindestens 200 g/m², insbesondere mindestens 300 g/m², vorteilhaft bis zu 400 g/m² Kunstharz eingesetzt. Sämtliche Angaben zum Kunstharz im Zusammenhang mit dieser Erfindung beziehen sich auf 100% Feststoff. Das Furnier soll in den meisten Anwendungen nur teilweise, ausgehend von der Trägerplatte mit Kunstharz getränkt sein. Die Furnieroberfläche ist in diesem Fall eine reine Holzoberfläche. Es ist aber auch ohne weiteres möglich, das Furnier vollständig mit Kunstharz zu tränken, so dass das Kunstharz die Furnieroberfläche abdeckt.

Dieser Überschuss an Kunstharz ist häufig nicht in einem Arbeitsgang bzw. in einer Schicht auf die Platte aufzubringen. Nach einer vorteilhaften Ausführung der Erfindung wird das flüssige Kunstharz in einer ersten und in einer zweiten Schicht aufgebracht, wobei optional das in der ersten Schicht aufgebrachte Kunstharz vor dem Aufbringen der zweiten Schicht getrocknet wird. Dieser Ablauf kann mehrfach wiederholt werden, z.B. wenn bis zu sechs oder mehr Schichten Kunstharz auf die Trägerplatte aufgebracht werden. Bei dem Trocknen des Kunstharzes ist darauf zu achten, dass zwar die Fließfähigkeit herabgesetzt oder gestoppt wird, dass jedoch die Reaktivität des Kunstharzes mindestens teilweise erhalten bleibt, so dass in der Presse eine Bindung zwischen Trägerplatte, Kunstharz und Furnier entsteht. Das Kunstharz wird also nach dem Auftragen in flüssiger Form getrocknet, aber nicht ausgehärtet. Das getrocknete Kunstharz kann klebrig sein. Grundsätzlich könnte das Kunstharz auch auf das Furnier aufgetragen werden, allerdings lässt es die geringe Festigkeit des Furniers in der Regel nicht zu, Kunstharz im Überschuss aufzubringen. Damit im Verpressungsprozess möglichst wenig Melaminharz in die Holzwerkstoffplatte (HWS-Platte) migriert, kann auch zunächst auf die Oberfläche der Platte eine Schicht eines wenig fließenden, duroplastischen Kunstharzes oder eines Gemisches aufgebracht werden. Es kann sich dabei um Harnstoff-Formaldehyd-Harz oder um ein Gemisch aus Harnstoff-Formaldehyd-Harz (UF-Harz) und Melamin-Formaldehyd-Harz (MF-Harz) mit einem hohen Anteil an UF-Harz handeln. Auch diese Harze würden natürlich vor dem Auftrag weiterer Harzschichten vorgetrocknet werden, bleiben jedoch reaktiv.

Das Kunstharz kann auf Wunsch eingefärbt sein, so dass beim Eindringen des Kunstharzes in das Furnier optisch wahrnehmbare Effekte erzielt werden, entweder um im Zusammenwirken mit anderen Maßnahmen wie dem Bedrucken des. Furniers eine hochwertigere optische Wirkung zu erreichen oder um z.B. um bei einem besonders dünnen Furnier die Trägerplatte abzudecken. Häufig verwendete Farbtöne sind beige oder braune Farbtöne.

Zur Durchführung der Erfindung sind Kunstharze geeignet, die unter Druck und bei Einwirken erhöhter Temperatur, insbesondere unter den nachfolgend geschilderten Pressbedingungen zunächst verflüssigen und dann aushärten. Besonders typisch und geeignet ist Melaminharz. In das Melaminharz können bei Bedarf Korund oder andere bekannte Zuschlagstoffe eingebracht sein, die z.B. die Abrieb- oder Kratzfestigkeit der Oberfläche verbessern. Auch Fasern, insbesondere Cellulosefasern, bevorzugt verhornte Cellulosefasern können zur besseren Schichtbildung in das Melaminharz eingebracht sein. Die zum Aufleimen von Furnier auf Trägerplatten üblicherweise verwendeten Harnstoff- oder Polyvinylacetatleime eignen sich nicht gut für eine Verwendung in einer Hochdruckpresse, zum einen weil sie unter den dort herrschenden Druck- und Temperaturbedingungen nicht verflüssigen, in das Furnier eindringen und dort aushärten. Zum anderen ist z.B. Harnstoff nicht lichtecht und würde bei weitgehender Durchdringung des Furniers nach kurzer Zeit zu einem Vergilben führen.

Das Verpressen des Pressgutstapels erfolgt erfindungsgemäß in einer Hochdruckpresse. Eine übliche Furnierpresse zum Aufbringen von Furnieren auf Trägerplatten, die mit einem Pressdruck von 3 N/m² bis 5 N/m², einer Presstemperatur von bis zu 120 °C und einer Pressdauer von drei bis fünf Minuten arbeitet, ist nicht ausreichend, um in wirtschaftlicher Weise, insbesondere in vertretbarer Zeit, die großen Mengen an Kunstharz zu verpressen und auszuhärten. Der Druck der Furnierpressen genügt außerdem nicht, um das Furnier zu komprimieren. Erfindungsgemäß wird daher vorgeschlagen, Hochdruckpressen wie z.B. Durchlaufpressen oder Kurztaktpressen einzusetzen, bei denen ein Pressdruck zwischen 25 N/mm² und 50 N/mm² eingestellt werden kann. Die Presszeit beträgt in einer Hochdruckpresse zwischen 20 Sekunden und 60 Sekunden. Die Presstemperatur beträgt zwischen 160 °C und 200 °C. Unter diesen, im Vergleich zu einer konventionellen Furnierpresse, scharfen Bedingungen wird gewährleistet, dass das Kunstharz mindestens abschnittsweise in das Furnier eindringt, und dass das Furnier komprimiert wird.

Erfindungsgemäßer Holzwerkstoff wird nach dem vorstehend beschriebenen Verfahren hergestellt und besteht aus einer Trägerplatte und einem Furnier, die durch Kunstharz miteinander verbunden sind, wobei das Furnier komprimiert ist und das Kunstharz mindestens 30% der Furnierstärke durchdringt. Das Kunstharz durchdringt nach einer bevorzugten Ausführung mindestens 50% der Furnierstärke, vorteilhaft mindestens 70% der Furnierstärke, maximal jedoch 100% der Furnierstärke. Diese Angaben beziehen sich auf den Holzwerkstoff und damit auf das komprimierte Furnier. Das Furnier wird vorteilhaft um mindestens 30 % der ursprünglichen Stärke komprimiert, vorteilhaft um mindestens 50%, nach einer bevorzugten Ausführung maximal um bis zu 90% der ursprünglichen Stärke. Trotz des Komprimierens bleibt eine ästhetisch und haptisch ansprechende Furnieroberfläche erhalten. Versuche haben gezeigt, dass sich das Einbringen des, bezogen auf das einfache Verleimen, überschüssigen Kunstharzes unproblematisch gestaltet, weil das wieder verflüssigte Kunstharz beim Verpressen Luft aus dem Furnier verdrängt und in Zwischenräume zwischen den Holzfasern eindringt und dort ausgehärtet wird. Auf diese Weise bewirkt das eindringende Kunstharz eine Steigerung der Druckfestigkeit.

Die vorstehende Beschreibung zeigt die zahlreichen Vorteile des erfindungsgemäßen Verfahrens bzw. des erfindungsgemäßen Holzwerkstoffs. Das hier vorgeschlagene Verfahren ist mit bekannten Anlagen einfach und aufgrund der kurzen Pressdauer auch sehr wirtschaftlich durchzuführen. Versuche zum Profilieren des erfindungsgemäßen Holzwerkstoffs haben gezeigt, dass die Kantenbearbeitung auf einfache und präzise Weise durchgeführt werden kann; Ausrisse am Furnier, die nach einem Kantenschnitt für bekannte Furnierplatten leider üblich sind, kommen hier nicht vor. Der erfindungsgemäße Holzwerkstoff ist nicht nur für Wand- und Deckenplatten, sondern auch für Fußbodenbeläge geeignet. Zudem lässt sich der Holzwerkstoff ausgezeichnet für Möbel oder Möbelteile mit beanspruchten Oberflächen einsetzen, ohne dass hier die Echtholzoberfläche aufgegeben werden muss. Hervorzuheben ist insbesondere die gute Beständigkeit gegen Feuchtigkeit, insbesondere, wenn das Kunstharz das Furnier zu mehr als 50% durchdringt.

Die Furnieroberfläche, d.h., die von der Trägerplatte wegweisende, sichtbare Oberfläche des Furniers des Holzwerkstoffs kann vor oder während, insbesondere aber auch nach dem Verpressen, einer Oberflächenbehandlung unterzogen werden. Insbesondere das Prägen der Holzoberfläche, um reliefartige bzw. dreidimensionale Strukturen zu erhalten, die z.B. eine holzartentypische Porenstruktur verleihen kann während oder nach dem Verpressen des Pressgutstapels durchgeführt werden. Aber auch das Bedrucken der Furnieroberfläche, z.B. um eine holzartentypische Färbung der Furnieroberfläche zu erreichen, kann erfolgen, vorzugsweise nach dem Verpressen des Pressgutstapels. Nach einer vorteilhaften Weiterbildung der Erfindung erfolgen das Prägen und das Bedrucken aufeinander bezogen, so dass ein synchrones Dekor entsteht, bei dem Farbgebung und -anordnung sowie Prägung aufeinander synchron abgestimmt sind. Das Prägen und Bedrucken kann insbesondere genutzt werden, um einem optisch wenig ansprechenden Furnier eine hochwertigere Anmutung zu geben.

Die Furnieroberfläche, die ggf. bedruckt und/oder geprägt ist, kann dann geölt oder lackiert werden. Ölen und Lackieren sind übliche Schutzmaßnahmen für Furnieroberflächen. Alternativ kann die ggf. bedruckte und/oder geprägte Furnieroberfläche auch mit einem Overlay, also einem kunstharzgetränkten Papier beschichtet werden, so wie es überwiegend für Laminatprodukte üblich ist. Die Pressbedingungen in einer Hochdruckpresse reichen aus, um ein Overlay auf der Furnieroberfläche zu fixieren.

Der Pressgutstapel kann nach einer weiteren Ausführung der Erfindung auch ein Underlay aufweisen, ein ggf. kunstharzgetränktes Papier oder Vlies, das beim Verpressen mit Trägerplatte und Furnier verbunden wird. Ein Papier oder insbesondere ein Vlies, das z.B. mit einem Flächengewicht von 30 g/m² bis 50 g/m² eingesetzt wird, verleiht dem Furnier auf dem Holzwerkstoff gemäß der Erfindung eine weiter gesteigerte Druckfestigkeit, da das Vlies auf das Furnier einwirkende Druckkräfte verteilt und ableitet. Wirkt im Kugelfalltest gemäß DIN EN 13329 eine Kugel auf die Furnieroberfläche eines Holzwerkstoffs ein, hinterlässt die Kugel eine kleinere Kalotte, also eine geringere Verformung, wenn unter dem Furnier ein Vlies oder ein Papier angeordnet ist. Ein Papier oder ein Vlies können sich auch dann als vorteilhaft erweisen, wenn das Furnier in kleineren Abmessungen verarbeitet wird als die Trägerplatte. Es vereinfacht das Fügen des Pressgutstapels wesentlich, wenn die Furnierstücke vorab auf einem Papier oder Vlies gefügt und fixiert sind, wobei das Papier oder Vlies die Abmessungen der Trägerplatte aufweist. Der Verbund aus Papier oder Vlies und Furnierstücken kann dann auf einfache Weise mit der mit flüssigem, dann getrocknetem Kunstharz beschichteten Trägerplatte angeordnet werden.

Auf einer dem Furnier abgewandten Unterseite der Trägerplatte kann nach einer vorteilhaften Ausführung der Erfindung ein Gegenzug angeordnet werden, der für ausgeglichene Spannungsverhältnisse auf den beiden beschichteten Seiten der Trägerplatte sorgt. Der Gegenzug kann auf verschiedene Weise ausgeführt sein, z.B. durch Aufbringen eines harzgetränkten Papiers, durch eine Kunstharzschicht oder durch Aufbringen eines Furniers. Wird eine Kunstharzschicht als Gegenzug gewählt, kann sie optional mit Fasern versehen sein. Die Spannungen, die sich an der Oberfläche der Trägerplatte und ggf. im Furnier aufbauen, können durch Befeuchten ggf. reduziert werden. Da das flüssige Kunstharz auch nach dem Trocknen noch Wasser in den Pressgutstapel einbringt, bauen sich angesichts des Überschusses an Kunstharz und des darin enthaltenen Wassers geringere Spannungen auf, so dass ggf. ein Holzwerkstoff ohne Gegenzug hergestellt werden kann bzw. der Gegenzug weniger Krafteinwirkung ausgleichen muss.

Als Trägerplatte kommen Holzwerkstoffplatten wie z.B. mineralisch oder mit Kunstharz gebundene Holzwerkstoffplatten, Spanplatte, OSB-Platte, HDF-Platte oder mitteldichte Faserplatte (MDF-Platte) in Frage, aber auch Sperrholzplatten, Furnierplatten, Stab- oder Stäbchenplatten oder Massivholzplatten können verwendet werden. Aufgrund des Überschusses an Kunstharz ist das erfindungsgemäße Verfahren tolerant gegenüber Unebenheiten der Plattenoberfläche, so dass auch Platten mit einer gröberen Oberflächenstruktur verwendet werden können.

Das Furnier kann ein Schälfurnier oder ein Messerfurnier sein. Es kann ein bedrucktes oder ein geprägtes Furnier verwendet werden, es können aber auch auf Vlies oder Papier fixierte Furniere, insbesondere gefügte Furnierstücke verwendet werden.

Details der Erfindung werden anhand von Ausführungsbeispielen näher erläutert. Es zeigen:
- Fig. 1: eine schematische Darstellung des erfindungsgemäßen Holzwerkstoffs
- Fig. 2: eine schematische Darstellung des vollständig von Kunstharz durchdrungenen Furniers
- Fig. 3: eine schematische Darstellung des teilweise von Kunstharz durchdrungenen Furniers.

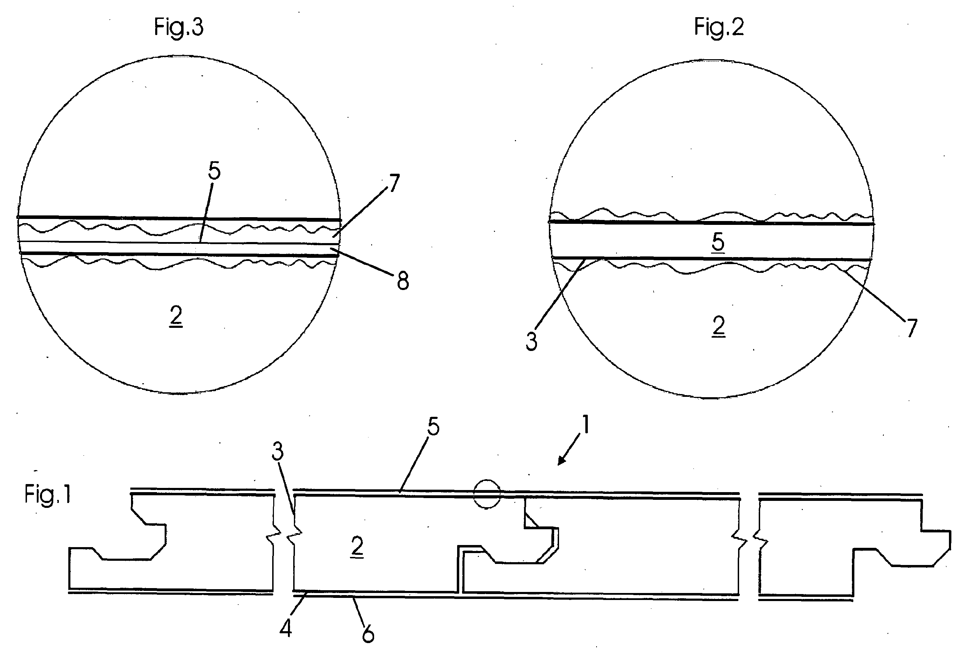

Fig. 1 zeigt eine schematische Darstellung des erfindungsgemäßen Holzwerkstoffs, hier einer Furnierplatte 1. Die Furnierplatte 1 weist eine Trägerplatte 2 auf, die auf der Oberseite 3 und der Unterseite 4 beschichtet ist. Auf der Oberseite 3 ist ein Furnier 5 angeordnet, auf der Unterseite 4 ist ein Gegenzug 6 angeordnet. Zwischen Trägerplatte 2 und Furnier 5 ist eine Kunstharzschicht 7 angeordnet, wobei das Kunstharz 7 teilweise oder vollständig in das Furnier 5 eingedrungen ist.

Als Trägerplatte können sämtliche vorstehend beschriebenen Platten aus Holz oder Holzwerkstoffmaterial eingesetzt werden. Die nachfolgend gewählten HDF-Platten können ohne weiteres durch andere Plattentypen ersetzt werden. Als Furnier können sämtliche vorgenannten Furniere eingesetzt werden, die nachfolgend beispielhaft eingesetzten Furniere können jederzeit durch andere Furniertypen ausgetauscht werden. Sowohl für die Trägerplatten als auch für das Furnier können Platten- oder Furnierstärke oder die Dichte des Furniers variieren.

Zur Herstellung des erfindungsgemäßen Holzwerkstoffs sind nachfolgend Pressbedingungen spezifisch angegeben. Es ist anzumerken, dass dies nur ausgewählte Pressbedingungen sind, die vorstehend angegebenen Druck-, Temperatur- und Zeitintervalle erlauben ein Variieren der Pressbedingungen, beispielsweise eine Verkürzung oder ein Verkürzen der Presszeit bei erhöhtem Druck oder erhöhter Temperatur oder einer Erhöhung beider Parameter. Gleiches gilt für eine Senkung von Druck und/oder Temperatur mit einer einhergehenden Verlängerung der Pressdauer.

Die verwendeten Kunstharze haben üblicherweise Feststoffgehalte von 60 - 70 %. Zur Reduzierung des Aufwandes des Trocknungsprozesses sowohl in energetischer als auch in maschinentechnischer Hinsicht, können die Kunstharze vor dem Auftrag mit Pulverharzen auf einen höheren Feststoffgehalt gebracht werden. Diese Gehalte können dann um 5 - 15 % höher liegen.

### Ausführungsbeispiel 1:

Ein Birken-Schälfurnier mit einer Stärke von 1,05 mm und einer Dichte von 350 kg/m³ soll als Furnier 5 auf eine hochdichte Faserplatte (HDF-Platte) von 12 mm Plattenstärke, Dichte: 850 kg/m³ als Trägerplatte 2 aufgebracht werden.

Erfindungsgemäß kann der Überschuss an Kunstharz 7 in einem weiten Bereich eingestellt werden, von 130 g/m² bis über 400 g/m². Vorliegend sollte der Versuch unternommen werden, so viel Kunstharz 7 aufzutragen, dass das Furnier 5 vollständig von Kunstharz durchdrungen wird. Auf die HDF-Platte wurden deshalb nach diesem Ausführungsbeispiel insgesamt 210g Kunstharz (100% Feststoff) in Form eines wässrigen Melaminharzes mit 60% Feststoffgehalt aufgebracht. Es wurden also 350 g/m² Melaminharz auf die Trägerplatte aufgebracht. Die 350 g/m² Melaminharz wurden in vier Schichten aufgetragen, mit jeder Schicht ein Viertel des Melaminharzes. Nach dem Auftragen von jeweils einem Viertel des Melaminharzes wurde das Kunstharz 7 in einem Umluftofen getrocknet bis das Melaminharz nicht mehr flüssig, aber noch klebrig war.

Vor dem Verpressen wurde auf der dem Furnier 5 abgewandten Unterseite 4 der Trägerplatte 2 ein Gegenzug 6 angeordnet, hier ein beharztes Papier mit einem Papiergewicht von 100 g/m² und einem Kunstharzauftrag von 120% der vorstehend beschriebenen 60%-igen Melaminharz verwendet.

In das noch klebrige Kunstharz wurde das vorstehend beschriebene Birken-Schälfurnier eingelegt und in einer Laborpresse, die in ihren Leistungsmerkmalen einer Kurztaktpresse entspricht, verpresst. Die Presstemperatur betrug 165 °C, die Pressdauer 1 Minute und der Pressdruck war auf 30 N/mm² eingestellt.

Das Birken-Schälfurnier ist ein helles Furnier 5, das kaum Strukturmerkmale wie z.B. Poren aufweist. Das auf das Furnier 5 einwirkende Pressblech war strukturiert, es zeigte die Porenstruktur von Eiche.

Nach dem Verpressen wurde die erfindungsgemäß hergestellte Furnierplatte 1 untersucht. Es zeigte sich, dass das Melamin das Furnier vollständig durchdrungen hat, so wie in Fig. 2 dargestellt. Auf der Oberseite des Furniers 5 hatte sich eine vollständige Melaminharzschicht ausgebildet, die die Struktur des Pressblechs besaß. Das Birken-Schälfurnier der Furnierplatte 1 wies eine Stärke von 0,5 mm auf, es wurde also um mehr als 50 % komprimiert. Der hergestellte Holzwerkstoff wies nicht nur die Porenstruktur einer Eiche-Oberfläche auf. Durch das in das Furnier 5 eingedrungene Melamin wurde die Farbgebung des ursprünglich hellen Schälfurniers dunkler, so dass auch die Farbgebung näher an eine Eiche-Oberfläche heranrückte. Dieser Effekt kann durch Einfärben des Melaminharzes intensiviert und gesteuert werden.

Die Furnieroberfläche des Holzwerkstoffs wurde 6 Stunden mit Wasser beaufschlagt. Es wurde keine Quellung oder Verformung des Furniers 5 oder des Holzwerkstoffs insgesamt festgestellt.

### Ausführungsbeispiel 2:

Für diese Ausführung der Erfindung wurde eine mit dem Ausführungsbeispiel 1 identische HDF-Platte als Trägerplatte 2 verwendet. Als Furnier 5 wird ein 0,9 mm Eichen-Messerfurnier verwendet. Es wurde das gleiche Melaminharz wie unter Ausführungsbeispiel 1 verwendet. Allerdings betrug der Einsatz lediglich 150 g/m² bei 100 % Feststoff, in dem 60%igen Melaminharz also 250 g/m².

Auf die Trägerplatte 2 wurde flüssiges Melaminharz im Mehrfachauftrag mit Zwischentrocknung aufgewalzt. Das Melaminharz wurde in drei Teilmengen eingeteilt und je eine Teilmenge wurde als einzelne Schicht aufgetragen, das jeweils flüssig aufgetragene Melaminharz wurde, wie in Ausführungsbeispiel 1 beschrieben, im Umlufttrockner getrocknet.

In das getrocknete, aber noch klebrige Kunstharz 7 wurde zunächst ein Glasvlies mit einem Flächengewicht von 50 g/m² als Underlay 8 und anschließend das Furnier 5, hier das Eichen-Messerfurnier, eingelegt. Als Gegenzug 6 wurde auf der Unterseite 4 der Trägerplatte 2 ein beharztes Papier mit einem Papiergewicht von 100 g/m² und einem Harzauftrag von 120% verwendet. Für den Harzauftrag wurde ebenfalls das 60%ige Melaminharz verwendet, das auch auf die Oberseite 3 der Trägerplatte 2 aufgebracht ist.
Der so hergestellte Pressgutstapel wurde in die bereits im Ausführungsbeispiel 1 beschriebene Laborpresse überführt und darin unter den gleichen Pressbedingungen mit glätten Pressblechen verpresst.

Der wie beschrieben hergestellte Holzwerkstoff, hier die Furnierplatte 1, wies eine attraktive Eichen-Oberfläche auf. Das Eichen-Messerfurnier wies nach dem Verpressen eine Stärke von 0,4 mm auf. Es war damit, ausgehend von der ursprünglichen Stärke von 0,9 mm um mehr als 65% komprimiert. Das Eichen-Messerfurnier war zu 50% von Kunstharz durchtränkt, so wie in Fig. 3 dargestellt. Es war kein Durchschlag des Melamins zu beobachten.

Die Furnieroberfläche wurde anschließend mit einem Öl, das für Fußboden-anwendungen vorgesehen ist, behandelt. Der gemäß Ausführungsbeispiel 2 hergestellte Holzwerkstoff konnte, ohne Ausrisse im Furnier festzustellen, in Paneele aufgeteilt werden. Die Paneele konnten ohne Schäden am Eichen-Messerfurnier an den Kanten profliert und als Fußbodenbelag eingesetzt werden.

## Patentansprüche

1. Verfahren zum Herstellen eines Holzwerkstoffs (1) bestehend aus einer Trägerplatte (2) und einem Furnier (5), die miteinander durch ein Kunstharz (7) verbunden sind sowie optional einem Overlay, einem Underlay und/oder einem Gegenzug, wobei
- ein flüssiges Kunstharz (7) in einem bezogen auf die zum Verleimen erforderlichen Menge, Überschuss von mindestens 30 % auf Trägerplatte (2) und/oder Furnier (5) aufgebracht wird,
- das aufgebrachte Kunstharz (7) getrocknet, aber nicht ausgehärtet wird,
- Trägerplatte (2) und Furnier (5) zu einem Pressgutstapel gefügt werden und
- der Pressgutstapel unter Wirkung von Druck und Temperatur zu dem Holzwerkstoff (1) verpresst wird.

2. Verfahren nach Anspruch 1, **dadurch gekennzeichnet, dass** das Aufbringen des Kunstharzes (7) in einer oder mehreren Schichten und bezogen auf die zum Verleimen erforderliche Menge, mit einem Überschuss von mindestens 50%, vorteilhaft von mindestens 100%, besonders bevorzugt von mindestens 200% erfolgt.

3. Verfahren nach mindestens einem der vorangehenden Ansprüche, **dadurch gekennzeichnet, dass** das zum Herstellen des Holzwerkstoffs (1) eingesetzte Kunstharz (7) eingefärbt und/oder pigmentiert wird.

4. Verfahren nach mindestens einem der vorangehenden Ansprüche, **dadurch gekennzeichnet, dass** das Verpressen des Pressgutstapels kontinuierlich unter Verwendung einer Durchlaufpresse oder getaktet unter Verwendung einer Kurztaktpresse erfolgt.

5. Verfahren nach mindestens einem der vorangehenden Ansprüche, **dadurch gekennzeichnet, dass** das Furnier (5) während des Verpressens um mindestens 30%, vorzugsweise um mindestens 50%, vorteilhaft um bis zu 90% der ursprünglichen Furnierstärke komprimiert wird.

6. Verfahren nach mindestens einem der vorangehenden Ansprüche, **dadurch gekennzeichnet, dass** eine Furnieroberfläche des Holzwerkstoffs (1) einer Oberflächenbehandlung unterzogen wird, insbesondere geprägt, bedruckt, geölt oder lackiert wird.

7. Verfahren nach mindestens einem der vorangehenden Ansprüche, **dadurch gekennzeichnet, dass** eine Furnieroberfläche des Holzwerkstoffs (1) geprägt und bedruckt wird, wobei Prägen und Bedrucken ein synchrones Dekor aus Prägung und Bedruckung erzeugen.

8. Verfahren nach mindestens einem der vorangehenden Ansprüche, **dadurch gekennzeichnet, dass** eine Furnieroberfläche des Holzwerkstoffs (1) mit einem Overlay beschichtet wird.

9. Verfahren nach mindestens einem der vorangehenden Ansprüche, **dadurch gekennzeichnet, dass** zwischen der Trägerplatte (2) und dem Furnier (5) ein Underlay (8) angeordnet ist, insbesondere ein Vlies oder ein Papier.

10. Verfahren nach mindestens einem der vorangehenden Ansprüche, **dadurch gekennzeichnet, dass** auf einer dem Furnier abgewandten Unterseite (4) der Trägerplatte (2) ein Gegenzug (6) aufgebracht ist.

11. Holzwerkstoff hergestellt nach dem Verfahren gemäß Anspruch 1 bis Anspruch 10, bestehend aus einer Trägerplatte (2) und einem Furnier (5), die miteinander durch ein Kunstharz (7) verbunden sind sowie optional einem Overlay, einem Underlay und/oder einem Gegenzug, **dadurch gekennzeichnet, dass** das Furnier (5) in seiner Furnierstärke komprimiert ist, und dass das Kunstharz mindestens 30% der Furnierstärke durchdringt, bevorzugt mindestens 50% der Furnierstärke, vorteilhaft mindestens 70% der Furnierstärke, maximal 100% der Furnierstärke durchdringt.

12. Holzwerkstoff nach Anspruch 11, **dadurch gekennzeichnet, dass** die Furnieroberfläche von einem Overlay überdeckt ist.

13. Holzwerkstoff nach mindestens einem der Ansprüche 11 oder 12, **dadurch gekennzeichnet, dass** die Furnieroberfläche bedruckt und/oder geprägt ist.

14. Holzwerkstoff nach mindestens einem der Ansprüche 11 bis 13, **dadurch gekennzeichnet, dass** die Furnieroberfläche geölt oder lackiert ist, insbesondere mit einem strahlungshärtenden Lack.

15. Holzwerkstoff nach mindestens einem der Ansprüche 11 bis 14, **dadurch gekennzeichnet, dass** ein Underlay (8) zwischen Trägerplatte (2) und Furnier (5) angeordnet ist, wobei das Underlay (8) bevorzugt ein Vlies oder ein Papier ist.

## Claims

1. A method for producing a wood-based material (1) consisting of a carrier board (2) and a veneer (5) that are bonded together by an artificial resin (7) and optionally an overlay, underlay and/or a backing layer, wherein:
- a liquid artificial resin (7) is applied to the carrier board (2) and/or veneer (5) in an excess of at least 30% with reference to the amount required for gluing,
- the applied artificial resin (7) is dried but not cured,
- the carrier board (2) and veneer (5) are joined into a stack of material to be pressed, and
- the stack of material to be pressed is pressed into the wood-based material (1) under the effect of pressure and temperature.

2. The method according to claim 1, **characterized in that** the artificial resin (7) is applied in one or more layers and in an excess of at least 50%, advantageously at least 100%, particularly preferably at least 200% with reference to the amount needed for gluing.

3. The method according to at least one of the preceding claims, **characterized in that** the artificial resin (7) used to produce the wood-based material (1) is stained and/or pigmented.

4. The method according to at least one of the preceding claims, **characterized in that** the stack of material to be pressed is pressed continuously using a continuous press, or cyclically using a short cycle press.

5. The method according to at least one of the preceding claims, **characterized in that** the veneer (5) is compressed during pressing by at least 30%, preferably by at least 50%, and advantageously by at least 90% of the original veneer thickness.

6. The method according to at least one of the preceding claims, **characterized in that** a veneer surface of the wood-based material (1) is subject to a surface treatment, in particular embossed, printed, oiled or painted.

7. The method according to at least one of the preceding claims, **characterized in that** a veneer surface of the wood-based material (1) is embossed and printed, wherein embossing and printing produce a synchronized decor of embossing and printing.

8. The method according to at least one of the preceding claims, **characterized in that** a veneer surface of the wood-based material (1) is coated with an overlay.

9. The method according to at least one of the preceding claims, **characterized in that** an underlay (8), in particular a fleece or paper, is arranged between the carrier board (2) and the veneer (5).

10. The method according to at least one of the preceding claims, **characterized in that** a backing layer (6) is applied on a bottom side (4) of the carrier board (2) facing away from the veneer.

11. A wood-based material produced by the method according to claim 1 to claim 10, consisting of a carrier board (2) and a veneer (5) that are bonded together by an artificial resin (7) and optionally an overlay, an underlay and/or a backing layer, **characterized in that** the veneer (5) is compressed in its veneer thickness, and that the artificial resin penetrates at least 30% of the veneer thickness, preferably at least 50% of the veneer thickness, advantageously at least 70% of the veneer thickness, and at a maximum 100% of the veneer thickness.

12. The wood-based material according to claim 11, **characterized in that** the veneer surface is covered by an overlay.

13. The wood-based material according to at least one of claims 11 or 12, **characterized in that** the veneer surface is printed and/or embossed.

14. The wood-based material according to at least one of claims 11 to 13, **characterized in that** the veneer surface is oiled or painted, in particular with a radiation-curing paint.

15. The wood-based material according to at least one of claims 11 to 14, **characterized in that** an underlay (8) is arranged between the carrier board (2) and the veneer (5), wherein the underlay (8) is preferably a fleece or paper.

## Revendications

1. Procédé de fabrication d'un matériau dérivé du bois (1) constitué d'une plaque de support (2) et d'un placage (5), qui sont reliés ensemble par une résine synthétique (7), ainsi qu'en option d'un overlay, d'un support et/ou d'un contre-parement, dans lequel
- une résine synthétique liquide (7) est appliquée en un excès d'au moins 30 % sur la plaque de support (2) et/ou le placage (5), par rapport à la quantité nécessaire à l'encollage,
- la résine synthétique appliquée (7) est séchée, mais pas durcie,
- la plaque de support (2) et le placage (5) sont assemblés en une pile de matière à presser, et
- la pile de matière à presser est pressée sous l'action de la pression et de la température en le matériau dérivé du bois (1).

2. Procédé selon la revendication 1, **caractérisé en ce que** l'application de la résine synthétique (7) s'effectue en une ou plusieurs couches et par rapport à la quantité nécessaire à l'encollage, avec un excès d'au moins 50 %, avantageusement d'au moins 100 %, de manière particulièrement préférée d'au moins 200 %.

3. Procédé selon au moins une des revendications précédentes, **caractérisé en ce que** la résine synthétique (7) utilisée pour la fabrication du matériau dérivé du bois (1) est colorée et/ou pigmentée.

4. Procédé selon au moins une des revendications précédentes, **caractérisé en ce que** le pressage de la pile de matière à presser s'effectue en continu en utilisant une presse continue ou de manière cadencée en utilisant une presse à cycles rapides.

5. Procédé selon au moins une des revendications précédentes, **caractérisé en ce que** le placage (5) est comprimé pendant le pressage d'au moins 30 %, de préférence d'au moins 50 %, avantageusement de jusqu'à 90 % de l'épaisseur de placage d'origine.

6. Procédé selon au moins une des revendications précédentes, **caractérisé en ce qu'**une surface de placage du matériau dérivé du bois (1) est soumise à un traitement superficiel, notamment est gaufrée, imprimée, huilée ou vernie.

7. Procédé selon au moins une des revendications précédentes, **caractérisé en ce qu'**une surface de placage du matériau dérivé du bois (1) est gaufrée et imprimée, dans lequel le gaufrage et l'impression génèrent un décor synchrone constitué de gaufrage et d'impression.

8. Procédé selon au moins une des revendications précédentes, **caractérisé en ce qu'**une surface de placage du matériau dérivé du bois (1) est enduite d'un overlay.

9. Procédé selon au moins une des revendications précédentes, **caractérisé en ce qu'**un support (8), notamment un non-tissé ou un papier, est disposé entre la plaque de support (2) et le placage (5).

10. Procédé selon au moins une des revendications précédentes, **caractérisé en ce qu'**un contre-parement (6) est appliquée sur un côté inférieur (4) de la plaque de support (2) détourné du placage.

11. Matériau dérivé du bois fabriqué selon le procédé selon la revendication 1 à la revendication 10, constitué d'une plaque de support (2) et d'un placage (5) qui sont reliés ensemble par une résine synthétique (7) ainsi qu'en option d'un overlay, d'un support et/ou d'un contre-parement, **caractérisé en ce que** le placage (5) est comprimé dans son épaisseur de placage, et que la résine synthétique pénètre au moins 30 % de l'épaisseur de placage, de préférence au moins 50 % de l'épaisseur de placage, avantageusement au moins 70 % de l'épaisseur de placage, au maximum 100 % de l'épaisseur de placage.

12. Matériau dérivé du bois selon la revendication 11, **caractérisé en ce que** la surface de placage est recouverte d'un overlay.

13. Matériau dérivé du bois selon au moins une des revendications 11 ou 12, **caractérisé en ce que** la surface de placage est imprimée et/ou gaufrée.

14. Matériau dérivé du bois selon au moins une des revendications 11 à 13, **caractérisé en ce que** la surface de placage est huilée ou vernie, notamment avec un vernis durcissant au rayonnement.

15. Matériau dérivé du bois selon au moins une des revendications 11 à 14, **caractérisé en ce qu'**un support (8) est disposé entre la plaque de support (2) et le placage (5), dans lequel le support (8) est de préférence un non-tissé ou un papier.
